# EUROPEAN PATENT SPECIFICATION

(11) **EP 3 391 495 B1**
(45) Date of publication and mention of the grant of the patent: **01.05.2019**
(21) Application number: 15821100.3
(22) Date of filing: 18.12.2015
(51) Int. Cl.: H02J 3/08, H02J 3/40, H02P 1/00

(54) **AN ELECTRIC POWER PLANT AND A METHOD FOR CONTROLLING THE SAME**
ELEKTRISCHES KRAFTWERK SOWIE VERFAHREN ZU DESSEN STEUERUNG
CENTRALE ÉLECTRIQUE ET PROCÉDÉ DE COMMANDE DE CELLE-CI

(43) Date of publication of application: 24.10.2018
(73) Proprietor: Wärtsilä Finland Oy, 65100 Vaasa (FI)
(72) Inventor: ÖSTMAN, Fredrik, 65100 Vaasa (FI); MÄKINEN, Jani, 60200 Seinäjoki (FI)
(74) Representative: Berggren Oy, Helsinki & Oulu
(86) International application number: PCT/FI2015/050907
(87) International publication number: WO 2016/102762

(56) References cited:
- US-A- 4 575 671
- US-A1- 2002 198 648
- US-A1- 2006 108 882

## Description

### Field of the disclosure

The disclosure relates generally to an electric power plant comprising at least one electric machine and at least one piston engine for operating the electric machine as a generator. More particularly, the disclosure relates to a control system, to a method, and to a computer program for controlling an electric power plant.

### Background

To cope with the increased amount of volatile power sources, such as for example wind and solar power sources, the demands on other power sources have changed radically because the other power sources should be able to compensate for the power variations of the volatile power sources. In some extreme cases, the power production of volatile power sources has been so high with respect to the power consumption that the instantaneous price of electricity has become negative, i.e. one has to pay money if inserting electric power to the power grid. For example, in Germany on 16 June 2013 the price of electricity fell down to about -100 €/MW. Therefore, it is very valuable to be able to be in standby and to aggressively increase the power production when needed and again to reduce or even stop the power production as fast as possible. The above-mentioned requirements may be challenging in conjunction with an electric power plant which comprises one or more generators, one or more piston engines for driving the one or more generators, and an electric conductor system for electrically connecting to each of the one or more generators and to an external electric system such as a power grid. Each piston engine is typically an internal combustion reciprocating piston engine such as for example a diesel engine.

A typical method for controlling an electric power plant of the kind mentioned above is to start and stop the piston engines and to switch off and back the generators when there are significant changes in the power need. Therefore, if the power need becomes too low, one or more of the piston engines are stopped and the respective one or more generators driven by the one or more piston engines are switched off from the electric conductor system of the electric power plant. If the power need increases again and exceeds a given limit, one or more of the piston engines are restarted and the respective one or more generators are switched back to the electric conductor system. An inherent challenge related to this approach is that response times needed for responding to changes in the power need tend to increase when a piston engine is stopped and needs to be started again and the respective generator is switched off and needs to be switched back again. In a case of a synchronous generator, the switching back comprises resynchronization which typically needs time.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new control system for controlling an electric power plant that comprises:
- one or more electric machines,
- one or more piston engines for operating the one or more electric machines as one or more generators, and
- an electric conductor system for electrically connecting to each of the one or more electric machines and to an external electric system.

A control system according to the invention comprises:
- a first controller for interrupting the fuel supply of first one or more of the piston engines connected to first one or more of the electric machines in response to a need to interrupt the power supply from the first one or more of the electric machines to the electric conductor system, and for reactivating the fuel supply of the first one or more of the piston engines in response to a need to reactivate the power supply from the first one or more of the electric machines to the electric conductor system, and
- a second controller for keeping the first one or more of the electric machines connected to the electric conductor system in response to a situation in which the fuel supply of the first one or more of the piston engines is interrupted so as to operate the first one or more of the electric machines as one or more electric motors for rotating the first one or more of the piston engines with electric power received from the electric conductor system.

The reactivation of the power supply can be significantly faster than in cases where piston engines are stopped and electric machines are switched off because the one or more piston engines whose fuel supply is interrupted are rotating and the respective one or more electric machines are kept connected to the electric conductor system. In exemplifying cases where the electric machines are synchronous electric machines, the electric machines are kept synchronized with the voltage prevailing in the electric conductor system. Thus, the one or more piston engines and the respective one or more electric machines constitute rotating reserve capable of being activated quickly. The rotating reserve is advantageous especially in power grids where there is a lot of non-synchronized power production such as solar panels and/or other power sources, e.g. wind mills, connected with power electronics to the power grid.

In a control system according to an exemplifying and non-limiting embodiment of the invention, the first controller is configured to maintain the fuel supply of second one or more of the piston engines connected to second one or more of the electric machines and the second controller is configured to keep the second one or more of the electric machines connected to the electric conductor system in response to a situation in which the fuel supply of the first one or more of the piston engines is interrupted. In this exemplifying case, the second one or more piston engines can be used to rotate the first one or more of the piston engines and the first one or more of the electric machines. This operation mode is useful in cases where the power plant is for example isolated from an external electric system, e.g. a power grid, but a need to supply electric power to the external power system may return at any moment.

In a control system according to an exemplifying and non-limiting embodiment of the invention, the first controller is configured to keep the fuel supplies of the piston engines alternately active. Piston engines whose fuel supply is interrupted and piston engines whose fuel supply is active can be alternated during operation for example in accordance with a pre-determined operating schedule, and/or in accordance with temperatures and/or other quantities measured from the piston engines, and/or in accordance with some other information.

In accordance with the invention, there is provided also a new electric power plant that comprises a control system according to the invention for controlling one or more piston engines and one or more electric machines of the electric power plant.

Each piston engine is advantageously an internal combustion reciprocating piston engine such as for example a diesel engine. Each electric machine can be for example a synchronous electric machine such as an electrically excited synchronous machine or a permanent magnet machine. In principle, it is also possible that one or more of the electric machines are for example asynchronous electric machines. In addition to one or more electric machines driven by one or more piston engines, an electric power plant according to an exemplifying and non-limiting embodiment of the invention may further comprise one or more electric machines driven by e.g. one or more gas-turbines and/or one or more other prime movers.

In accordance with the invention, there is provided also a new method for controlling an electric power plant of the kind described above. A method according to the invention comprises:
- interrupting the fuel supply of one or more piston engines connected to one or more electric machines of the electric power plant in response to a need to interrupt the power supply from the one or more electric machines to an electric conductor system of the electric power plant,
- reactivating the fuel supply of the one or more piston engines in response to a need to reactivate the power supply from the one or more electric machines to the electric conductor system, and
- keeping the one or more electric machines connected to the electric conductor system in response to a situation in which the fuel supply of the one or more piston engines is interrupted so as to operate the one or more electric machines as one or more electric motors for rotating the one or more piston engines with electric power received from the electric conductor system.
there is provided also a new computer program for controlling an electric power plant of the kind described above. A computer program according to the invention comprises computer executable instructions for controlling a programmable processing system to:
- interrupt the fuel supply of one or more piston engines connected to one or more electric machines of the electric power plant in response to a need to interrupt the power supply from the one or more electric machines to an electric conductor system of the electric power plant,
- reactivate the fuel supply of the one or more piston engines in response to a need to reactivate the power supply from the one or more electric machines to the electric conductor system, and
- keep the one or more electric machines connected to the electric conductor system in response to a situation in which the fuel supply of the one or more piston engines is interrupted so as to operate the one or more electric machines as one or more electric motors for rotating the one or more piston engines with electric power received from the electric conductor system.
there is provided also a new computer program product. The computer program product comprises a non-volatile computer readable medium, e.g. a compact disc "CD", encoded with a computer program according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figure 1 illustrates an electric power plant according to an exemplifying and non-limiting embodiment of the invention, and
figure 2 is a flowchart of a method according to an exemplifying and non-limiting embodiment of the invention for controlling an electric power plant.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

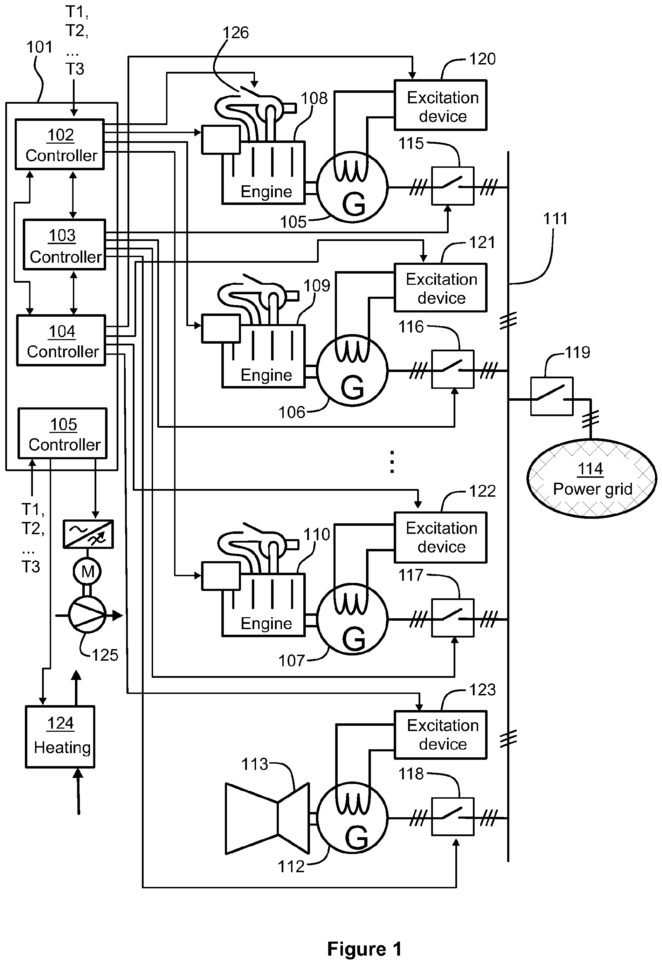

Figure 1 illustrates an electric power plant according to an exemplifying and non-limiting embodiment of the invention. The electric power plant comprises electric machines 105, 106, 107, and 112. In this exemplifying case, each of the electric machines is an electrically excited synchronous machine. The electric power plant comprises excitation devices 120, 121, 122, and 123 for supplying excitation currents to the rotor windings of the electric machines. Each excitation device can be for example a contactless rotating exciter or a slip-ring exciter. The electric power plant comprises piston engines 108, 109, and 110 for operating the electric machines 105-107 as generators. Each of the piston engines 105-107 is advantageously an internal combustion reciprocating piston engine such as for example a diesel engine. Furthermore, the exemplifying power plant illustrated in figure 1 comprises a gas-turbine 113 for operating the electric machine 112 as a generator. The electric power plant comprises an electric conductor system 111 for electrically connecting to each of the electric machines and to an external electric system 114 that can be for example a power grid. The electric conductor system 111 comprises switches 115, 116, 117, and 118 for electrically connecting and disconnecting the electric machines 105-107 and 112 to and from the electric conductor system 111. The electric conductor system 111 further comprises a switch 119 for connecting and disconnecting the whole electric power plant to and from the external electric system 114.

The electric power plant comprises a control system 101 according to an exemplifying and non-limiting embodiment of the invention for controlling the piston engines 108-110 and the electric machines 105-107. Furthermore, the control system 101 can be configured to control the electric machine 112 and the gas-turbine 113, or the electric power plant may comprise a separate control system for controlling the electric machine 112 and the gas-turbine 113. The control system 101 comprises a first controller 102 for interrupting the fuel supply of one or more of the piston engines 108-110 in response to a need to interrupt the power supply from the respective one or more of the electric machines 105-107 to the electric conductor system 111, and for reactivating the fuel supply of the one or more of the piston engines in response to a need to reactivate the power supply from the one or more of the electric machines to the electric conductor system. The control system 101 further comprises a second controller 103 for keeping the above-mentioned one or more of the electric machines connected to the electric conductor system 111 when the fuel supply of the above-mentioned one or more of the piston engines is interrupted so as to operate this or these electric machines as one or more electric motors for rotating the one or more of the piston engines with electric power received from the electric conductor system 111. The reactivation of the power supply can take place quickly because the one or more piston engines whose fuel supply is interrupted are rotating and the respective one or more electric machines are kept synchronized with the voltage prevailing in the electric conductor system 111. Therefore, the one or more piston engines can be reactivated fast by reactivating its/their fuel supply and correspondingly the one or more electric machines are reactivated fast to supply electric power since there is no synchronization delay. Thus, the one or more piston engines and the respective one or more electric machines constitute rotating reserve capable of being activated quickly. The power plant having the rotating reserve can be utilized with a fast response in for example frequency control of the external electric system 114.

In a control system according to an exemplifying and non-limiting embodiment of the invention, the first controller 102 is configured to interrupt the fuel supplies of all of the piston engines 108-110 and the second controller 103 is configured to keep all of the electric machines 105-107 connected to the electric conductor system 111 in response to a situation in which the electric power plant is capable of receiving electric power from the external electric system 111 and there is a need to interrupt power supply from the electric power plant to the external electric system. This operation mode is useful for example in cases where the instantaneous price of electricity has become negative, i.e. the owner of the power plant has to pay money if inserting power to the external electric system 114.

In a control system according to an exemplifying and non-limiting embodiment of the invention, the first controller 102 is configured to keep the fuel supply of one or more of the piston engines 108-110 active when the fuel supply of other one or more of the piston engines has been interrupted. The second controller 103 is configured to keep all of the electric machines 105-107 electrically connected to the electric conductor system 111. In this exemplifying case, the one or more electric machines connected to the one or more piston engines whose fuel supply is active can be used to rotate the one or more other electric machines connected to the one or more other piston engines whose fuel supply is interrupted. This operation mode is useful for example in cases where the power plant is electrically disconnected from the external electric system 114 or the power plant is electrically connected to the external electric system 114 but it is not advantageous to transfer electric power between the electric power plant and the external electric system 114, and a need to supply electric power to the external power system 114 may return at any moment.

A control system according to an exemplifying and non-limiting embodiment of the invention comprises a third controller 104 configured to control the excitation of each of the electric machines 105-107 in accordance with a target value of voltage of the electric conductor system 111 and/or a target value of the reactive power to be supplied from the electric machine under consideration to the electric conductor system 111. Therefore, each electric machine which is connected to a piston engine whose fuel supply is interrupted can be used as a rotating reactive power compensator. In other words, the electric machine connected to the piston engine whose fuel supply is interrupted constitutes not only rotating reserve but the electric machine can operate also as a rotating reactive power compensator.

In a control system according to an exemplifying and non-limiting embodiment of the invention, the first controller 102 is configured to keep the fuel supply of the piston engines 108-110 alternately active for example so that one or more piston engines whose fuel supply is interrupted is/are alternated during the operation in accordance with a pre-determined operating schedule, and/or in accordance with temperatures and/or other quantities measured from the piston engines, and/or in accordance with some other information. In a control system according to an exemplifying and non-limiting embodiment of the invention, the first controller 102 is configured to receive temperature signals T1, T2,..., T3 from the piston engines 108-110 and to activate the fuel supply of a particular one of the piston engines whose temperature signal indicates the lowest temperature from among the temperatures indicated by the temperature signals and to interrupt the fuel supply of another one of the piston engines whose temperature signal indicates the highest temperature from among the temperatures indicated by the temperature signals in order to equalize the temperatures of the piston engines.

A control system according to an exemplifying and non-limiting embodiment of the invention comprises a fourth controller 105 configured to receive the temperature signals T1, T2,..., T3 from the piston engines 108-110 and to activate a heating system to warm up the cooling liquid of each of the piston engines whose fuel supply is interrupted and whose temperature signal is indicative of temperature less than a first limit value. The temperature of the piston engine under consideration is advantageously kept above a suitable limit in order to keep the piston engine capable of providing a fast response to a power need. In figure 1, the heating system is denoted with a figure reference 124. The heating system 124 can be based on for example a heating resistor for heating the cooling liquid of the piston engine under consideration. It is also possible that the heating system 124 comprises a heat exchanger for transferring heat from the cooling liquid of one or more piston engines whose fuel supply is active to the cooling liquid of one or more other piston engines whose fuel supply has been interrupted. It is also possible that the heating system 124 comprises a heat exchanger for transferring heat from the exhaust gas of one or more piston engines whose fuel supply is active to the cooling liquid of one or more other piston engines whose fuel supply has been interrupted.

In a control system according to an exemplifying and non-limiting embodiment of the invention, the above-mentioned first controller 102 comprises separate controller units so that each of the controller units is configured to control one generator-set that comprises an electric machine and a piston engine so that the controller unit controls the related generator-set substantially independently of the other controller units. Correspondingly, the above-mentioned second controller 103 may comprise separate generator-set-specific controller units, the above-mentioned third controller 104 may comprise separate generator-set-specific controller units, and/or the above-mentioned fourth controller 105 may comprise generator-set-specific controller units. Thus, the control system 101 may comprise generator-set-specific partial control systems each controlling the related generator-set substantially independently of the other partial control systems. In the above-described exemplifying case, the control system 101 is a functionally distributed control system. A control system according to another exemplifying and non-limiting embodiment of the invention is a centralized control system for controlling all of the generator-sets.

An inherent inconvenience of using a generator-set comprising an electric machine and a piston engine as a rotating reserve in the way described above is that the piston engine consumes mechanical energy when being rotated by the electric machine. A significant portion of the mechanical energy consumption is caused by pumping losses taking place primarily inside the cylinders during compression strokes and, at the later stage, at turbocharger turbines when air pumped by the pistons exits from the piston engine to the exhaust gas ducts. Furthermore, in many cases, a piston engine is provided with one or more pumps, such as a cooling liquid pump, which is/are mechanically driven by the piston engine. In these exemplifying cases, another portion of the above-mentioned mechanical energy consumption is caused by the pumps which are mechanically driven by the piston engines.

In a control system according to an exemplifying and non-limiting embodiment of the invention, the first controller 102 is configured to reduce the opening times of inlet valves of each of the piston engines 108-110 whose fuel supply is interrupted so as to reduce the above-mentioned pumping losses taking place mainly inside the cylinders, and thereby to reduce the mechanical power needed for rotating the piston engine under consideration. When the opening times of the inlet valves are reduced, the amount of air at the beginnings of compression strokes is reduced and thus the compression pressure is reduced. It is also possible that the first controller 102 is configured to reduce the air flow in the inlet manifold with the aid of a choke valve in order to reduce the amount of air at the beginnings of compression strokes when the fuel supply is interrupted. In some exemplifying cases it may be advantageous to reduce the opening times of the inlet valves down to zero and/or close the choke valve when the fuel supply is interrupted. It is also possible that the first controller 102 is configured to adjust the opening times of exhaust valves of each of the piston engines 108-110 whose fuel supply is interrupted so as to reduce the above-mentioned pumping losses.

The opening times of the inlet valves can be reduced for example so that there are different camshaft shapes for normal operation when the fuel supply is active and for reserve operation when the fuel supply is interrupted. The camshaft shape can be changed while running by means of for example hydraulic, pneumatic, and/or electric actuation. It is also possible that the engine is provided with a device fitted on the cylinder head for lifting the inlet valves and possibly also the exhaust valves, i.e. for keeping the inlet valves and possibly also the exhaust valves closed, during the reserve operation when the fuel supply is interrupted. The above-mentioned device can be hydraulic, electric, and/or pneumatic. For example, hydraulic rocker arms can be controlled with an additional source of hydraulic power in order to facilitate the valve lifting independently of the cam actuation.

In order to keep a piston engine whose fuel supply is interrupted capable of providing a fast response to a power need, it is often advantageous to keep the turbocharger of the piston engine rotating. This, however, creates energy losses because the turbocharger tends to increase the amount of air at the beginnings of compression strokes which, in turn, tends to increase the above-discussed pumping losses.

In a control system according to an exemplifying and non-limiting embodiment of the invention, the first controller 102 is configured to open an escape valve for allowing at least a part of the air flow generated by a turbocharger of a piston engine whose fuel supply is interrupted to exit to ambient air so as to reduce the mechanical power needed for using the piston engine as a pump for generating another air flow for keeping the turbocharger rotating. In figure 1, the escape valve of the piston engine 108 is denoted with a figure reference 126.

In a power plant according to an exemplifying and non-limiting embodiment of the invention, the cooling liquid pumps of the piston engines 108-110 are electrically operated cooling liquid pumps in order to reduce the mechanical power needed for rotating each piston engine whose fuel supply is interrupted. It is also possible that some other pumps which are typically mechanically driven by the piston engines are replaced with electrically operated pumps. In figure 1, one of the electrically operated cooling liquid pumps is denoted with a figure reference 125.

A control system according to an exemplifying and non-limiting embodiment of the invention comprises the fourth controller 105 configured to receive the temperature signals T1, T2,..., T3 from the piston engines 108-110 and to activate the heating system 124 to warm up the cooling liquid of each of the piston engines whose fuel supply is interrupted and whose temperature signal is indicative of temperature less than a first limit value. The fourth controller 105 is further configured to activate the electrically operated cooling liquid pump of each of the piston engines whose temperature signal is indicative of temperature above a second limit value which is greater than the above-mentioned first limit value. Thus, the temperature of each of the piston engines is kept between the first and second limit values.

The implementation of the control system 101 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the control system 101 may comprise one or more memory circuits each of which can be for example a Random Access Memory "RAM" circuit.

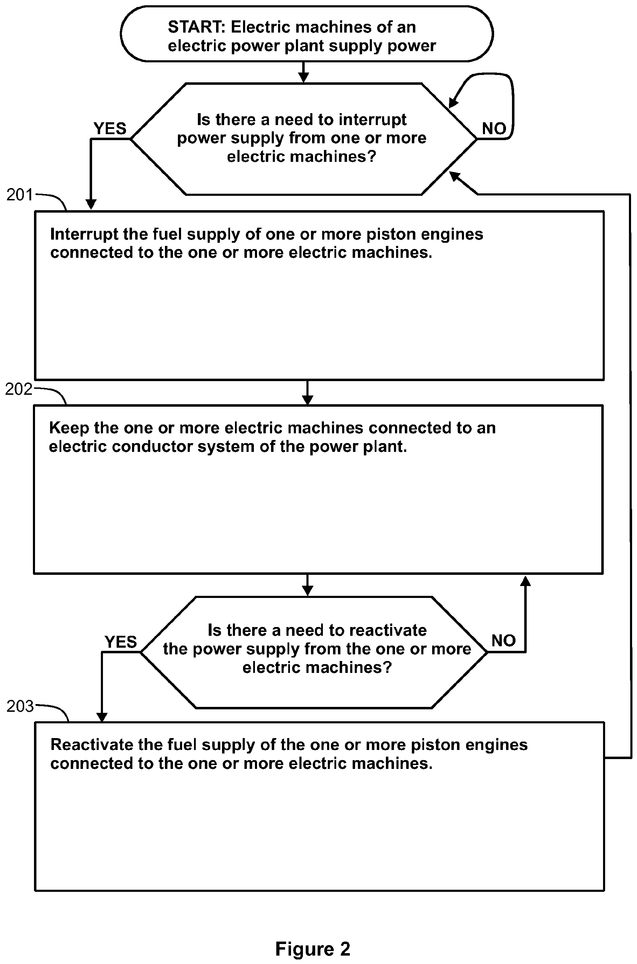

Figure 2 shows a flowchart of a method according to an exemplifying and non-limiting embodiment of the invention for controlling an electric power plant that comprises:
- one or more electric machines,
- one or more piston engines for operating the one or more electric machines as one or more generators, and
- an electric conductor system for electrically connecting to each of the one or more electric machines and to an external electric system.

The method comprises the following actions:
- action 201: interrupting the fuel supply of first one or more of the piston engines connected to first one or more of the electric machines in response to a need to interrupt the power supply from the first one or more of the electric machines to the electric conductor system,
- action 202: keeping the first one or more of the electric machines connected to the electric conductor system in response to a situation in which the fuel supply of the first one or more of the piston engines is interrupted so as to operate the first one or more of the electric machines as one or more electric motors for rotating the first one or more of the piston engines with electric power received from the electric conductor system, and
- action 203: reactivating the fuel supply of the first one or more of the piston engines in response to a need to reactivate the power supply from the first one or more of the electric machines to the electric conductor system.

A method according to an exemplifying and non-limiting embodiment of the invention comprises maintaining the fuel supply of second one or more of the piston engines connected to second one or more of the electric machines and keeping the second one or more of the electric machines connected to the electric conductor system in response to a situation in which the fuel supply of the first one or more of the piston engines is interrupted.

A method according to an exemplifying and non-limiting embodiment of the invention comprises keeping the fuel supplies of the piston engines alternately active so that, at each time instant, the fuel supply of at least one of the piston engines is active and the fuel supply of at least one other of the piston engines is interrupted.

A method according to an exemplifying and non-limiting embodiment of the invention comprises:
- receiving temperature signals from the one or more piston engines,
- activating the fuel supply of a particular one of the piston engines whose temperature signal indicates the lowest temperature from among the temperatures indicated by the temperature signals, and
- interrupting the fuel supply of another one of the piston engines whose temperature signal indicates a highest temperature from among the temperatures indicated by the temperature signals.

A method according to an exemplifying and non-limiting embodiment of the invention comprises interrupting the fuel supplies of all of the piston engines and keeping all of the electric machines connected to the electric conductor system in response to a situation in which the electric power plant is capable of receiving electric power from the external electric system and there is a need to interrupt power supply from the electric power plant to the external electric system.

A method according to an exemplifying and non-limiting embodiment of the invention comprises receiving temperature signals from the one or more piston engines and activating a heating system to warm up the cooling liquid of each of the piston engines whose fuel supply is interrupted and whose temperature signal is indicative of temperature less than a first limit value.

A method according to an exemplifying and non-limiting embodiment of the invention comprises activating an electrically operated cooling liquid pump of each of the piston engines whose temperature signal is indicative of temperature above a second limit value.

A method according to an exemplifying and non-limiting embodiment of the invention comprises controlling the excitation of each of the electric machines in accordance with a target value of voltage of the electric conductor system and/or a target value of reactive power to be supplied from the electric machine under consideration to the electric conductor system.

A method according to an exemplifying and non-limiting embodiment of the invention comprises reducing the opening times of inlet valves of each of the piston engines whose fuel supply is interrupted so as to reduce the mechanical power needed for rotating the piston engine under consideration.

A method according to an exemplifying and non-limiting embodiment of the invention comprises opening an escape valve for allowing at least a part of an air flow generated by a turbocharger of each of the piston engines whose fuel supply is interrupted to exit to ambient air so as to reduce mechanical power needed for using the piston engine as a pump for generating another air flow for keeping the turbocharger rotating.

A computer program according to an exemplifying and non-limiting embodiment of the invention comprises computer executable instructions for controlling a programmable processing system to carry out actions related to a method according to any of the above-described exemplifying and non-limiting embodiments of the invention.

A computer program according to an exemplifying and non-limiting embodiment of the invention comprises software modules for controlling an electric power plant that comprises:
- one or more electric machines,
- one or more piston engines for operating the one or more electric machines as one or more generators, and
- an electric conductor system for electrically connecting to each of the one or more electric machines and to an external electric system.

The software modules comprise computer executable instructions for controlling a programmable processing system to:
- interrupt the fuel supply of one or more of the piston engines connected to one or more of the electric machines in response to a need to interrupt the power supply from the one or more electric machines to the electric conductor system,
- keep the one or more electric machines connected to the electric conductor system in response to a situation in which the fuel supply of the one or more piston engines is interrupted so as to operate the one or more electric machines as one or more electric motors for rotating the one or more piston engines with electric power received from the electric conductor system, and
- reactivate the fuel supply of the one or more piston engines in response to a need to reactivate the power supply from the one or more electric machines to the electric conductor system.

The software modules can be for example subroutines or functions implemented with programming tools suitable for the programmable processing system.

A computer program product according to an exemplifying and non-limiting embodiment of the invention comprises a computer readable medium, e.g. a compact disc "CD", encoded with a computer program according to an exemplifying embodiment of invention.

A signal according to an exemplifying and non-limiting embodiment of the invention is encoded to carry information defining a computer program according to an exemplifying embodiment of invention.

The specific examples provided in the description given above should not be construed as limiting the scope and/or the applicability of the appended claims. Lists and groups of examples provided in the description given above are not exhaustive unless otherwise explicitly stated.

## Claims

1. An electric power plant that comprises:
- one or more electric machines (105-107),
- one or more piston engines (108-110) for operating the one or more electric machines as one or more generators,
- one or more excitation devices (120-122) for supplying excitation currents to respective ones of said one or electric machines,
- an electric conductor system (111) for electrically connecting to each of the one or more electric machines and to an external electric system (114), the electric conductor system comprising switches (115, 116, 117) for electrically connecting and disconnecting the electric machines to and from the electric conductor system and a switch (119) for connecting and disconnecting the electric power plant to and from the external electric system, and
- a control system (101) for controlling the electric power plant,
wherein the control system comprises a first controller (102) for interrupting fuel supply of first one or more of the piston engines connected to first one or more of the electric machines in response to a need to interrupt power supply from the first one or more of the electric machines to the electric conductor system, and for reactivating the fuel supply of the first one or more of the piston engines in response to a need to reactivate the power supply from the first one or more of the electric machines to the electric conductor system, **characterized in that** the control system further comprises a second controller (103) for keeping the first one or more of the electric machines directly connected to the electric conductor system in response to a situation in which the fuel supply of the first one or more of the piston engines is interrupted so as to operate the first one or more of the electric machines as one or more electric motors for rotating the first one or more of the piston engines with electric power received from the electric conductor system.

2. An electric power plant according to claim 1, wherein the first controller is configured to maintain fuel supply of second one or more of the piston engines connected to second one or more of the electric machines and the second controller is configured to keep the second one or more of the electric machines connected to the electric conductor system in response to a situation in which the fuel supply of the first one or more of the piston engines is interrupted.

3. An electric power plant according to claim 2, wherein the first controller is configured to keep the fuel supplies of the piston engines alternately active so that, at each time instant, the fuel supply of at least one of the piston engines is active and the fuel supply of at least one other of the piston engines is interrupted.

4. An electric power plant according to claim 3, wherein the first controller is configured to receive temperature signals from the one or more piston engines, to activate the fuel supply of a particular one of the piston engines whose temperature signal indicates lowest temperature from among temperatures indicated by the temperature signals, and to interrupt the fuel supply of another one of the piston engines whose temperature signal indicates highest temperature from among the temperatures indicated by the temperature signals.

5. An electric power plant according to claim 1, wherein the first controller is configured to interrupt the fuel supplies of all of the piston engines and the second controller is configured to keep all of the electric machines connected to the electric conductor system in response to a situation in which the electric power plant is capable of receiving electric power from the external electric system and there is a need to interrupt power supply from the electric power plant to the external electric system.

6. An electric power plant according to any of claims 1-5, wherein the control system further comprises a third controller (104) configured to control excitation of each of the electric machines in accordance with at least one of the following: a target value of voltage of the electric conductor system, a target value of reactive power to be supplied from the electric machine under consideration to the electric conductor system.

7. An electric power plant according to any of claims 1-6, wherein the control system further comprises a fourth controller (105) configured to receive temperature signals from the one or more piston engines and to activate a heating system to warm up cooling liquid of each of the piston engines whose fuel supply is interrupted and whose temperature signal is indicative of temperature less than a first limit value.

8. An electric power plant according to claim 7, wherein the fourth controller is configured to activate an electrically operated cooling liquid pump of each of the piston engines whose temperature signal is indicative of temperature above a second limit value.

9. An electric power plant according to any of claims 1-8, wherein the first controller is further configured to reduce opening times of inlet valves of each of the piston engines whose fuel supply is interrupted so as to reduce mechanical power needed for rotating the piston engine under consideration.

10. An electric power plant according to any of claims 1-9, wherein the first controller is further configured to open an escape valve for allowing at least a part of an air flow generated by a turbocharger of each of the piston engines whose fuel supply is interrupted to exit to ambient air so as to reduce mechanical power needed for using the piston engine as a pump for generating another air flow for keeping the turbocharger rotating.

11. An electric power plant according to any of claims 1-10, wherein each piston engine is an internal combustion reciprocating piston engine.

12. An electric power plant according to claim 11, wherein each piston engine is a diesel engine.

13. A method for controlling an electric power plant that comprises:
- one or more electric machines,
- one or more piston engines for operating the one or more electric machines as one or more generators,
- one or more excitation devices for supplying excitation currents to respective ones of said one or electric machines, and
- an electric conductor system for electrically connecting to each of the one or more electric machines and to an external electric system, the electric conductor system comprising switches for electrically connecting and disconnecting the one or more electric machines to and from the electric conductor system and a switch for connecting and disconnecting the electric power plant to and from the external electric system,
the method comprising:
- interrupting (201) fuel supply of first one or more of the piston engines connected to first one or more of the electric machines in response to a need to interrupt power supply from the first one or more of the electric machines to the electric conductor system, and
- reactivating (203) the fuel supply of the first one or more of the piston engines in response to a need to reactivate the power supply from the first one or more of the electric machines to the electric conductor system,
**characterized in that** the method further comprises keeping (202) the first one or more of the electric machines directly connected to the electric conductor system in response to a situation in which the fuel supply of the first one or more of the piston engines is interrupted so as to operate the first one or more of the electric machines as one or more electric motors for rotating the first one or more of the piston engines with electric power received from the electric conductor system.

14. A method according to claim 13, wherein the method comprises maintaining fuel supply of second one or more of the piston engines connected to second one or more of the electric machines and keeping the second one or more of the electric machines connected to the electric conductor system in response to a situation in which the fuel supply of the first one or more of the piston engines is interrupted.

15. A method according to claim 13, wherein the method comprises interrupting the fuel supplies of all of the piston engines and keeping all of the electric machines connected to the electric conductor system in response to a situation in which the electric power plant is capable of receiving electric power from the external electric system and there is a need to interrupt power supply from the electric power plant to the external electric system.

## Patentansprüche

1. Elektrisches Kraftwerk, umfassend:
- eine oder mehrere elektrische Maschinen (105 - 107),
- einen oder mehrere Kolbenmotoren (108 - 110) zum Betreiben der einen oder mehreren elektrischen Maschinen als einen oder mehrere Generatoren,
- eine oder mehrere Erregungsvorrichtung (120 - 122) zum Zuführen von Erregerströmen an entsprechende der einen oder mehreren elektrischen Maschinen,
- ein elektrisches Leitersystem (111) zum elektrischen Verbinden mit jeder der einen oder mehreren elektrischen Maschinen und mir einem externen elektrischen System (114), das elektrische Leitersystem aufweisend Schalter (115, 116, 117) zum elektrischen Verbinden und Trennen der elektrischen Maschinen mit dem und vom elektrischen Leitersystem, und einen Schalter (119) zum Verbinden und Trennen des elektrischen Kraftwerks mit dem und vom externen elektrischen System, und
- ein Steuerungssystem (101) zum Steuern des elektrischen Kraftwerks,
wobei das Steuerungssystem eine erste Steuerung (102) umfasst zum Unterbrechen der Kraftstoffzufuhr eines ersten oder mehrerer der Kolbenmotoren, die mit einer ersten oder mehreren der elektrischen Maschinen verbunden sind, als Reaktion auf eine Notwendigkeit, die Stromversorgung von der einen ersten oder mehreren elektrischen Maschinen zum elektrischen Leitersystem zu unterbrechen, und zum Reaktivieren der Kraftstoffzufuhr des einen ersten oder mehrerer der Kolbenmotoren als Reaktion auf eine Notwendigkeit, die Stromversorgung von der einen ersten oder mehreren der elektrischen Maschinen zum elektrischen Leitersystem zu reaktivieren, **dadurch gekennzeichnet, dass** das Steuerungssystem ferner eine zweite Steuerung (103) umfasst zum Aufrechterhalten der direkten Verbindung der einen ersten oder mehrerer der elektrischen Maschinen mit dem elektrischen Leitersystem als Reaktion auf eine Situation, in welcher die Kraftstoffzufuhr des einen ersten oder mehrerer der Kolbenmotoren unterbrochen ist, um die eine erste oder mehrere der elektrischen Maschinen als einen oder mehrere Elektromotoren zum Drehen eines ersten oder mehrerer der Kolbenmotoren mit vom elektrischen Leitersystem empfangener elektrischer Energie zu betreiben.

2. Elektrisches Kraftwerk nach Anspruch 1, wobei die erste Steuerung dafür eingerichtet ist, die Kraftstoffzufuhr von einem zweiten oder mehreren der Kolbenmotoren, die mit einer ersten oder mehreren der elektrischen Maschinen verbunden sind, aufrechtzuerhalten, und die zweite Steuerung dafür eingerichtet ist, die Verbindung der einen zweiten oder mehrerer der elektrischen Maschinen mit dem elektrischen Leitersystem aufrecht zu erhalten als Reaktion auf eine Situation, in welcher die Kraftstoffzufuhr des einen ersten oder mehrerer der Kolbenmotoren unterbrochen ist.

3. Elektrisches Kraftwerk nach Anspruch 2, wobei die erste Steuerung dafür eingerichtet ist, die Kraftstoffzufuhren der Kolbenmotoren abwechselnd aktiv zu halten, sodass zu jedem Zeitpunkt die Kraftstoffzufuhr mindestens eines der Kolbenmotoren aktiv ist, und die Kraftstoffzufuhr mindestens eines anderen der Kolbenmotoren unterbrochen ist.

4. Elektrisches Kraftwerk nach Anspruch 3, wobei die erste Steuerung dafür eingerichtet ist, Temperatursignale von dem einen oder den mehreren Kolbenmotoren zu erhalten, um die Kraftstoffzufuhr eines bestimmten der Kolbenmotoren zu aktivieren, dessen Temperatursignal die niedrigste Temperatur unter den durch die Temperatursignale angezeigten Temperaturen anzeigt, und um die Kraftstoffzufuhr eines anderen der Kolbenmotoren zu unterbrechen, dessen Temperatursignal die höchste Temperatur unter den durch die Temperatursignale angezeigten Temperaturen anzeigt.

5. Elektrisches Kraftwerk nach Anspruch 1, wobei die erste Steuerung dafür eingerichtet ist, die Kraftstoffzufuhren aller Kolbenmotoren zu unterbrechen, und die zweite Steuerung dafür eingerichtet ist, die Verbindung aller elektrischen Maschinen mit dem elektrischen Leitersystem aufrechtzuerhalten als Reaktion auf eine Situation, in welcher das elektrische Kraftwerk elektrische Energie vom externen elektrischen System empfangen kann und eine Notwendigkeit besteht, die Stromversorgung vom elektrischen Kraftwerk zum externen elektrischen System zu unterbrechen.

6. Elektrisches Kraftwerk nach einem der Ansprüche 1 - 5, wobei das Steuerungssystem ferner eine dritte Steuerung (104) umfasst, die dafür eingerichtet ist, die Erregung jeder der elektrischen Maschinen im Einklang mit mindestens einem der folgenden Werte zu steuern: einem Zielwert der Spannung des elektrischen Leitersystems, einem Zielwert der Blindleistung, die dem elektrischen Leitersystem von der betreffenden elektrischen Maschine zuzuführen ist.

7. Elektrisches Kraftwerk nach einem der Ansprüche 1 - 6, wobei das Steuerungssystem ferner eine vierte Steuerung (105) umfasst, die dafür eingerichtet ist, Temperatursignale von dem einen oder den mehreren Kolbenmotoren zu empfangen und ein Heizsystem zu aktivieren, um Kühlflüssigkeit jedes der Kolbenmotoren zu erwärmen, dessen Kraftstoffzufuhr unterbrochen ist und dessen Temperatursignal eine Temperatur anzeigt, die unter einem ersten Grenzwert liegt.

8. Elektrisches Kraftwerk nach Anspruch 7, wobei die vierte Steuerung dafür eingerichtet ist, eine elektrisch betriebene Kühlflüssigkeitspumpe jedes der Kolbenmotoren zu aktivieren, dessen Temperatursignal eine Temperatur anzeigt, die über einem zweiten Grenzwert liegt.

9. Elektrisches Kraftwerk nach einem der Ansprüche 1 - 8, wobei die erste Steuerung ferner dafür eingerichtet ist, Öffnungszeiten von Einlassventilen jedes der Kolbenmotoren zu reduzieren, dessen Kraftstoffzufuhr unterbrochen ist, um die mechanische Leistung zu reduzieren, die dazu notwendig ist, den betreffenden Kolbenmotor zu drehen.

10. Elektrisches Kraftwerk nach einem der Ansprüche 1 - 9, wobei die erste Steuerung ferner dafür eingerichtet ist, ein Auslassventil zu öffnen, um mindestens einen Teil eines Luftstroms, der durch einen Turbolader jedes der Kolbenmotoren erzeugt wird, dessen Kraftstoffzufuhr unterbrochen ist, in die Umgebungsluft entweichen zu lassen, um die mechanische Leistung zu verringern, die dazu notwendig ist, den Kolbenmotor als eine Pumpe zum Erzeugen eines weiteren Luftstroms zum Aufrechterhalten der Drehung des Turboladers zu verwenden.

11. Elektrisches Kraftwerk nach einem der Ansprüche 1 - 10, wobei jeder Kolbenmotor ein Hubkolben-Verbrennungsmotor ist.

12. Elektrisches Kraftwerk nach Anspruch 11, wobei jeder Kolbenmotor ein Dieselmotor ist.

13. Verfahren zum Steuern eines elektrischen Kraftwerks umfassend:
- eine oder mehrere elektrische Maschinen,
- einen oder mehrere Kolbenmotoren zum Betreiben der einen oder mehreren elektrischen Maschinen als einen oder mehrere Generatoren,
- eine oder mehrere Erregungsvorrichtungen zum Zuführen von Erregerströmen an entsprechende der einen oder mehreren elektrischen Maschinen, und
- ein elektrisches Leitersystem zum elektrischen Verbinden mit jeder der einen oder mehreren elektrischen Maschinen und mit einem externen elektrischen System, das elektrische Leitersystem aufweisend Schalter zum elektrischen Verbinden und Trennen der einen oder mehreren elektrischen Maschinen mit dem und vom elektrischen Leitersystem, und einen Schalter zum Verbinden und Trennen des elektrischen Kraftwerks mit dem und vom externen elektrischen System,
das Verfahren umfassend:
- Unterbrechen (201) der Kraftstoffzufuhr eines ersten oder mehrerer der Kolbenmotoren, die mit einer ersten oder mehreren der elektrischen Maschinen verbunden sind, als Reaktion auf eine Notwendigkeit, die Stromversorgung von der einen ersten oder mehreren der elektrischen Maschinen zum elektrischen Leitersystem zu unterbrechen, und
- Reaktivieren (203) der Kraftstoffzufuhr des einen ersten oder mehrerer der Kolbenmotoren als Reaktion auf eine Notwendigkeit, die Stromversorgung von der einen ersten oder mehreren der elektrischen Maschinen zum elektrischen Leitersystem zu reaktivieren,
**dadurch gekennzeichnet, dass** das Verfahren ferner das Aufrechterhalten (202) der direkten Verbindung der einen ersten oder mehrerer der elektrischen Maschinen mit dem elektrischen Leitersystem als Reaktion auf eine Situation, in welcher die Kraftstoffzufuhr des einen ersten oder mehrerer der Kolbenmotoren unterbrochen ist, um die eine erste oder mehrere der elektrischen Maschinen als einen oder mehrere Elektromotoren zum Drehen des einen ersten oder mehrerer der Kolbenmotoren mit vom elektrischen Leitersystem empfangener elektrischer Energie zu betreiben, umfasst.

14. Verfahren nach Anspruch 13, wobei das Verfahren das Aufrechterhalten der Kraftstoffzufuhr von einem zweiten oder mehreren der Kolbenmotoren, die mit einer zweiten oder mehreren der elektrischen Maschinen verbunden sind, und das Aufrechterhalten der Verbindung des einen zweiten oder mehreren der elektrischen Maschinen mit dem elektrischen Leitersystem als Reaktion auf eine Situation, in welcher die Kraftstoffzufuhr des einen ersten oder mehrerer der Kolbenmotoren unterbrochen ist, umfasst.

15. Verfahren nach Anspruch 13, wobei das Verfahren das Unterbrechen der Kraftstoffzufuhren aller Kolbenmotoren, und das Aufrechterhalten der Verbindung aller elektrischen Maschinen mit dem elektrischen Leitersystem als Reaktion auf eine Situation, in welcher das elektrische Kraftwerk elektrische Energie vom externen elektrischen System empfangen kann und eine Notwendigkeit besteht, die Stromversorgung vom elektrischen Kraftwerk zum externen elektrischen System zu unterbrechen, umfasst.

## Revendications

1. Centrale électrique, comprenant :
- une ou plusieurs machines électriques (105-107),
- un ou plusieurs moteurs à pistons (108-110) pour faire fonctionner la ou les machines électriques en tant qu'un ou plusieurs générateurs,
- un ou plusieurs dispositifs d'excitation (120-122) pour fournir des courants d'excitation à des machines respectives de ladite ou des desdites machines électriques,
- un système de conducteurs électriques (111) destiné à être connecté électriquement à chacune de la ou des machines électriques et à un système électrique externe (114), le système de conducteurs électriques comprenant des interrupteurs (115, 116, 117) pour connecter électriquement les machines électriques au système de conducteurs électriques et pour les en déconnecter électriquement, et un interrupteur (119) pour connecter la centrale électrique au système électrique externe et pour l'en déconnecter, et
- un système de contrôle (101) pour contrôler la centrale électrique,
le système de contrôle comprenant un premier contrôleur (102) pour couper l'alimentation en carburant d'un ou plusieurs premiers moteurs à pistons des moteurs à pistons connectés à une ou plusieurs premières machines électriques des machines électriques en réponse à une nécessité de couper une alimentation électrique de la ou des premières machines électriques des machines électriques au système de conducteurs électriques, et pour réactiver l'alimentation en carburant du ou des premiers moteurs à pistons des moteurs à pistons en réponse à une nécessité de réactiver l'alimentation électrique de la ou des premières machines électriques des machines électriques au système de conducteurs électriques, la centrale électrique étant **caractérisée en ce que** le système de contrôle comprend en outre un deuxième contrôleur (103) pour maintenir la ou les premières machines électriques des machines électriques connectées directement au système de conducteurs électriques en réponse à une situation dans laquelle l'alimentation en carburant du ou des premiers moteurs à pistons des moteurs à pistons est coupée de manière à faire fonctionner la ou les premières machines électriques des machines électriques en tant qu'un ou plusieurs moteurs électriques pour faire tourner le ou les premiers moteurs à pistons des moteurs à pistons avec de l'énergie électrique reçue du système de conducteurs électriques.

2. Centrale électrique selon la revendication 1, dans laquelle le premier contrôleur est configuré pour maintenir une alimentation en carburant d'un ou plusieurs seconds moteurs à pistons des moteurs à pistons connectée à une ou plusieurs secondes machines électriques des machines électriques, et le deuxième contrôleur est configuré pour maintenir la ou les secondes machines des machines électriques connectées au système de conducteurs électriques en réponse à une situation dans laquelle l'alimentation en carburant du ou des premiers moteurs à pistons des moteurs à pistons est coupée.

3. Centrale électrique selon la revendication 2, dans laquelle le premier contrôleur est configuré pour maintenir les alimentations en carburant des moteurs à pistons actives en alternance de sorte que, à chaque instant, l'alimentation en carburant d'au moins un des moteurs à pistons soit active et l'alimentation en carburant d'au moins un autre des moteurs à pistons soit coupée.

4. Centrale électrique selon la revendication 3, dans laquelle le premier contrôleur est configuré pour recevoir des signaux de température en provenance du ou des moteurs à pistons, pour activer l'alimentation en carburant d'un moteur à pistons particulier des moteurs à pistons dont le signal de température indique une température minimale parmi des températures indiquées par les signaux de température, et pour couper l'alimentation en carburant d'un autre des moteurs à pistons dont le signal de température indique une température maximale parmi les températures indiquées par les signaux de température.

5. Centrale électrique selon la revendication 1, dans laquelle le premier contrôleur est configuré pour couper les alimentations en carburant de tous les moteurs à pistons, et le deuxième contrôleur est configuré pour maintenir toutes les machines électriques connectées au système de conducteurs électriques en réponse à une situation dans laquelle la centrale électrique est capable de recevoir une énergie électrique en provenance du système électrique externe et dans laquelle il est nécessaire de couper une alimentation électrique de la centrale électrique au système électrique externe.

6. Centrale électrique selon l'une quelconque des revendications 1 à 5, dans laquelle le système de contrôle comprend en outre un troisième contrôleur (104) configuré pour contrôler une excitation de chacune des machines électriques selon au moins un des paramètres suivants : une valeur cible de tension du système de conducteurs électriques, une valeur cible de puissance réactive que doit fournir la machine électrique considérée au système de conducteurs électriques.

7. Centrale électrique selon l'une quelconque des revendications 1 à 6, dans laquelle le système de contrôle comprend un quatrième contrôleur (105) configuré pour recevoir des signaux de température en provenance du ou des moteurs à pistons et pour activer un système de chauffage pour réchauffer un liquide de refroidissement de chacun des moteurs à pistons dont l'alimentation en carburant est coupée et dont le signal de température indique une température inférieure à une première valeur limite.

8. Centrale électrique selon la revendication 7, dans laquelle le quatrième contrôleur est configuré pour activer une pompe à liquide de refroidissement actionnée électriquement de chacun des moteurs à pistons dont le signal de température indique une température supérieure à une seconde valeur limite.

9. Centrale électrique selon l'une quelconque des revendications 1 à 8, dans laquelle le premier contrôleur est en outre configuré pour réduire des temps d'ouverture de soupapes d'entrée de chacun des moteurs à pistons dont l'alimentation en carburant est coupée, afin de réduire la puissance mécanique nécessaire pour faire tourner le moteur à pistons considéré.

10. Centrale électrique selon l'une quelconque des revendications 1 à 9, dans laquelle le premier contrôleur est en outre configuré pour ouvrir une soupape d'échappement pour permettre à au moins une partie d'un écoulement d'air généré par un turbocompresseur de chacun des moteurs à pistons dont l'alimentation en carburant est coupée d'être évacué vers l'air ambiant de manière à réduire la puissance mécanique nécessaire pour utiliser le moteur à pistons en tant que pompe pour générer un autre écoulement d'air pour maintenir le turbocompresseur en rotation.

11. Centrale électrique selon l'une quelconque des revendications 1 à 10, dans laquelle chaque moteur à pistons est un moteur à pistons alternatifs à combustion interne.

12. Centrale électrique selon la revendication 11, dans laquelle chaque moteur à pistons est un moteur diesel.

13. Procédé de contrôle d'une centrale électrique qui comprend :
- une ou plusieurs machines électriques,
- un ou plusieurs moteurs à pistons pour faire fonctionner la ou les machines électriques en tant qu'un ou plusieurs générateurs,
- un ou plusieurs dispositifs d'excitation pour fournir des courants d'excitation à des machines respectives de ladite ou des desdites machines électriques, et
- un système de conducteurs électriques destiné à être connecté électriquement à chacune de la ou des machines électriques et à un système électrique externe, le système de conducteurs électriques comprenant des interrupteurs pour connecter électriquement la ou les machines électriques au système de conducteurs électriques et pour la ou les en déconnecter électriquement, et un interrupteur pour connecter la centrale électrique au système électrique externe et pour l'en déconnecter,
le procédé consistant à :
- couper (201) l'alimentation en carburant d'un ou plusieurs premiers moteurs à pistons des moteurs à pistons connectés à une ou plusieurs premières machines électriques des machines électriques en réponse à une nécessité de couper une alimentation électrique de la ou des premières machines électriques des machines électriques au système de conducteurs électriques, et
- réactiver (203) l'alimentation en carburant du ou des premiers moteurs à pistons des moteurs à pistons en réponse à une nécessité de réactiver l'alimentation électrique de la ou des premières machines électriques des machines électriques au système de conducteurs électriques,
le procédé étant **caractérisé en ce qu'**il consiste en outre à maintenir (202) la ou les premières machines électriques des machines électriques connectées directement au système de conducteurs électriques en réponse à une situation dans laquelle l'alimentation en carburant du ou des premiers moteurs à pistons des moteurs à pistons est coupée de manière à faire fonctionner la ou les premières machines électriques des machines électriques en tant qu'un ou plusieurs moteurs électriques pour faire tourner le ou les premiers moteurs à pistons des moteurs à pistons avec de l'énergie électrique reçue du système de conducteurs électriques.

14. Procédé selon la revendication 13, le procédé consistant à maintenir une alimentation en carburant d'un ou plusieurs seconds moteurs à pistons des moteurs à pistons connectée à une ou plusieurs secondes machines électriques des machines électriques, et maintenir la ou les secondes machines des machines électriques connectées au système de conducteurs électriques en réponse à une situation dans laquelle l'alimentation en carburant du ou des premiers moteurs à pistons des moteurs à pistons est coupée.

15. Procédé selon la revendication 13, le procédé consistant à couper les alimentations en carburant de tous les moteurs à pistons, et maintenir toutes les machines électriques connectées au système de conducteurs électriques en réponse à une situation dans laquelle la centrale électrique est capable de recevoir une énergie électrique en provenance du système électrique externe et dans laquelle il est nécessaire de couper une alimentation électrique de la centrale électrique au système électrique externe.
